(19) **Europäisches Patentamt / European Patent Office / Office européen des brevets**

(11) **EP 3 057 870 B1**

(12) **FASCICULE DE BREVET EUROPEEN**

(45) Date de publication et mention de la délivrance du brevet:
**11.09.2019 Bulletin 2019/37**

(21) Numéro de dépôt: **14799835.5**

(22) Date de dépôt: **15.10.2014**

(51) Int Cl.:
*B64D 41/00* (2006.01)    *H02M 1/12* (2006.01)
*H02H 7/122* (2006.01)    *H02H 9/00* (2006.01)
*H02H 9/02* (2006.01)

(86) Numéro de dépôt international:
**PCT/FR2014/052624**

(87) Numéro de publication internationale:
**WO 2015/055951 (23.04.2015 Gazette 2015/16)**

(54) **DISPOSITIF DE PROTECTION CONTRE LES COURTS-CIRCUITS AMONT D'UN MODULE DE PUISSANCE**

VORRICHTUNG ZUM SCHUTZ GEGEN KURZSCHLÜSSE STROMAUFWÄRTS EINES LEISTUNGSMODULS

DEVICE FOR PROTECTING AGAINST SHORT-CIRCUITS UPSTREAM OF A POWER MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.10.2013 FR 1360159**

(43) Date de publication de la demande:
**24.08.2016 Bulletin 2016/34**

(73) Titulaire: **Safran Electrical & Power**
**31702 Blagnac Cedex (FR)**

(72) Inventeurs:
• **SIMON, Jean-Jacques**
  **F-95210 Saint-Gratien (FR)**
• **DHEILLY, Nicolas**
  **F-77127 Lieusaint (FR)**
• **CASIMIR, Roland**
  **F-78100 Saint Germain en Laye (FR)**

(74) Mandataire: **David, Alain et al**
**Cabinet Beau de Loménie**
**158, rue de l'Université**
**75340 Paris Cedex 07 (FR)**

(56) Documents cités:
**EP-A1- 0 164 193    US-A- 4 843 515**

**Description**

Domaine technique et art antérieur

L'invention s'inscrit dans le domaine des modules d'alimentation électrique de puissance, notamment pour des armoires de distribution d'énergie électrique utilisées dans des aéronefs.

Un module d'alimentation électrique de puissance, plus simplement dénommé module de puissance, est alimenté à partir d'une source d'énergie électrique continue, obtenue ou non par redressement à travers un transformateur d'une énergie alternative et comprend un filtre d'entrée comportant au moins un condensateur. Le module de puissance comprend au moins un convertisseur qui comprend lui-même notamment des inductances et des diodes de roue libre, intégrées ou non à des composants de commutation.

Habituellement, plusieurs modules de puissance identiques ou non sont mis en oeuvre à partir d'une même source d'énergie électrique et peuvent être associés en parallèle dans une armoire de distribution pour alimenter une même charge.

Dans le cas où un filtre d'entrée est minimisé en volume, un convertisseur s'avère particulièrement vulnérable à un court-circuit d'entrée qui constitue un mode commun de défaillance à l'échelle d'une armoire de distribution. Le court-circuit peut provoquer la circulation, dans le module de puissance, d'un courant excessif, notamment dans les diodes de roue libre du convertisseur.

Pour remédier à ce problème, on procède généralement à l'ajout d'organes de coupure, tels que des fusibles, des contacteurs ou des disjoncteurs. Outre la complexité due à ces organes additionnels, ceci conduit à une interruption de fonctionnement qui peut être gênante ou peut même affecter la sécurité.

La réduction de la taille du filtre d'entrée requise pour l'intégration dans l'armoire de distribution, est limitée pour le condensateur C qui est dimensionné pour fournir au minimum le courant efficace requis par le convertisseur, et pour l'inductance L d'entrée par la valeur minimale autorisée notamment par les contraintes d'émission de courants perturbateurs au sens de la CEM (Compatibilité Electro-Magnétique). Dans ce cas, le courant produit par un court-circuit à l'entrée est :

$$U/\sqrt{L/C}.$$

Une faible valeur de L contribue à réduire le volume du filtrage d'entrée, accroissant ainsi le courant produit par le court-circuit.

Ce courant circule dans les diodes de roue libre durant un temps important, ce qui nécessite de surdimensionner ces diodes.

Il existe donc un besoin de réaliser un filtre d'entrée de taille réduite tout en évitant qu'en cas de court-circuit à l'entrée de ce filtre un courant circule avec une intensité excessive ou pendant trop longtemps dans des diodes de roue libre d'un convertisseur d'un module de puissance.

Définition et objet de l'invention

L'invention vise à remédier aux inconvénients précités et à permettre notamment de protéger des modules de puissance contre des courts-circuits d'entrée de façon simple et sûre et sans conduire à une interruption intempestive du fonctionnement du module de puissance.

Pour résoudre les problèmes mentionnés ci-dessus, il est proposé un dispositif de protection contre des courts-circuits amont d'un module d'alimentation électrique de puissance comprenant un filtre d'entrée avec au moins un condensateur et une inductance et un convertisseur avec une pluralité de diodes de roue libre, caractérisé en ce qu'il comprend au moins un bobinage auxiliaire couplé à ladite au moins une inductance du filtre d'entrée et un élément dissipatif connecté audit au moins un bobinage auxiliaire, ledit élément dissipatif étant adapté pour dissiper l'énergie emmagasinée dans ledit au moins un condensateur du filtre d'entrée, lorsqu'un court-circuit est réalisé à l'entrée dudit filtre d'entrée.

De façon plus particulière, l'élément dissipatif peut être constitué par une résistance de type résistance de freinage.

Selon un mode particulier de réalisation, un organe de commutation, tel qu'un composant actif ou un amplificateur magnétique, est configuré de manière à n'autoriser le courant à circuler dans ledit bobinage auxiliaire que lorsque cet organe de commutation a détecté un dysfonctionnement dû au court-circuit, tel qu'une chute brutale de tension aux bornes du condensateur du filtre d'entrée ou une surintensité au sein du convertisseur.

L'invention s'applique tout particulièrement aux modules de puissance destinés à l'alimentation électrique des aéronefs.

Brève description des dessins

D'autres caractéristiques et avantages de l'invention ressortiront de la description suivante de modes particuliers de réalisation, donnés à titre d'exemples, en référence aux dessins annexés, sur lesquels :

La figure 1 est une vue schématique d'un exemple de réalisation d'un dispositif de protection contre les courts-circuits amont de modules de puissance conformément à l'invention.

La figure 2 est une vue plus détaillée d'un autre exemple de réalisation de l'invention.

La figure 3A montre des courbes représentant l'évolution dans le temps de la tension aux bornes d'un condensateur de filtre d'entrée d'un module de puissance en cas de court-circuit à l'entrée, respectivement avec et sans le dispositif de protection selon l'invention.

La figure 3B montre des courbes représentant l'évolution dans le temps de l'intensité du courant noté is1 sur la figure 2 à l'entrée d'un module de puissance en cas de court-circuit en amont, respectivement avec et sans le dispositif de protection selon l'invention.

La figure 4A montre des courbes représentant l'évolution dans le temps de l'intensité du courant en différents points du circuit de la figure 2 en cas de court-circuit à l'entrée, pour une première valeur de résistance choisie.

La figure 4B montre des courbes représentant l'évolution dans le temps de la tension en différents points du circuit de la figure 2 en cas de court-circuit à l'entrée pour la première valeur de résistance choisie.

La figure 5A montre des courbes représentant l'évolution dans le temps de l'intensité du courant en différents points du circuit de la figure 2 en cas de court-circuit à l'entrée, pour une deuxième valeur de résistance choisie.

La figure 5B montre des courbes représentant l'évolution dans le temps de la tension en différents points du circuit de la figure 2 en cas de court-circuit à l'entrée pour la deuxième valeur de résistance choisie.

La figure 6 montre un exemple de dispositif de protection selon l'invention avec une détection de surintensité et une commutation par un amplificateur magnétique.

La figure 7 montre un autre exemple de dispositif de protection selon l'nvention avec une détection de surintensité ou de sous-tension et une commutation par un composant actif.

Description détaillée de modes de réalisation préférentiels

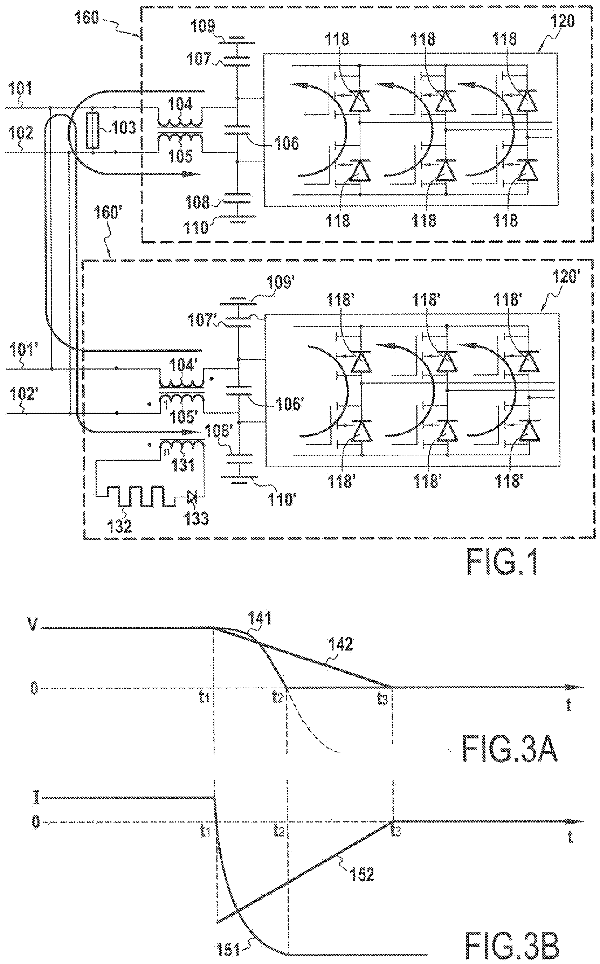

En figure 1, on a représenté schématiquement un dispositif selon l'invention destiné à protéger contre les courts-circuits amont des modules de puissance 160, 160' prévus pour alimenter en énergie électrique des équipements, notamment au sein d'aéronefs où les dispositifs d'alimentation électrique doivent pouvoir alimenter de plus en plus d'équipements avec des puissances de plus en plus élevées.

Sur la figure 1, on voit de façon schématique deux modules de puissance 160, 160' qui comportent notamment chacun au moins un convertisseur 120, 120' avec entre autres des inductances et des composants de commutation associés à des diodes de roue libre 118, 118' intégrées ou non à ces composants. Chaque module de puissance 160, 160' est alimenté à partir d'une source de courant continu par des lignes 101, 102 ; 101', 102' et un filtre d'entrée comprenant des inductances 104, 105 ; 104', 105' couplées ou non et des condensateurs 106 à 108 ; 106' à 108' reliés ou non au châssis 109,110 ; 109', 110'.

On a représenté en outre sur la figure 1 un bobinage auxiliaire 131, connecté à un élément dissipatif 132 et une diode 133, et couplé à l'une 105' des inductances du filtre d'entrée.

L'élément dissipatif 132 peut être constitué par une résistance du type résistance de freinage ou par un autre dispositif dissipatif qui est susceptible de dissiper de l'énergie emmagasinée dans un condensateur du filtre d'entrée, grâce au bobinage auxiliaire 131 qui joue un rôle dès lors qu'un court-circuit 103 est réalisé à l'entrée du filtre comme par exemple entre les lignes 101 et 102 comme représenté sur la figure 1.

Sur la figure 3A on a représenté l'évolution de la tension aux bornes du condensateur 106 ou 106' en cas d'apparition du court-circuit 103 à un instant t1, d'une part au cas où le bobinage auxiliaire 131 et l'élément dissipatif 132 ne seraient pas mis en oeuvre (courbe 141), ce qui constitue l'art antérieur, et d'autre part en présence du bobinage auxiliaire 131, de l'élément dissipatif 132 et de la diode 133 selon l'invention (courbe 142).

On a par ailleurs représenté sur la figure 3A les instants t2, t3 qui correspondent au début de la conduction des diodes de roue libre du convertisseur 120, 120' respectivement sans et avec le bobinage auxiliaire et l'élément dissipatif. On voit que la décroissance de la tension aux bornes du condensateur 106 ou 106' est beaucoup plus lente avec le dispositif de protection selon l'invention (courbe 142) que sans ce dispositif (courbe 141).

Sur la figure 3B on a représenté l'évolution de l'intensité du courant vers le module de puissance 160, 160' en cas d'apparition du court-circuit 103 à un instant t1, d'une part au cas où le bobinage auxiliaire 131 et l'élément dissipatif 132 ne seraient pas mis en oeuvre (courbe 151), ce qui constitue l'art antérieur, et d'autre part en présence du bobinage auxiliaire 131, de l'élément dissipatif 132 et de la diode 133 selon l'invention (courbe 152). On a par ailleurs représenté sur la figure 3B les instants t2, t3 qui correspondent au début de la conduction des diodes de roue libre du convertisseur 120, 120' respectivement sans et avec le bobinage auxiliaire et l'élément dissipatif. On voit que l'intensité du courant de court-circuit est beaucoup plus limitée avec le dispositif de protection selon l'invention (courbe 152) que sans ce dispositif (courbe 151).

De façon plus particulière, l'intensité du courant de court-circuit sans enroulement auxiliaire 131 (courbe 151) présente une valeur égaie à

$$-U / \sqrt{L/C}$$

où L est la valeur de inductance 104, 105 ; 104', 105' du filtre d'entrée et C est la capacité du condensateur 106, 106' du filtre d'entrée.

Au contraire, l'intensité du courant de court-circuit avec un enroulement auxiliaire 131 ayant un rapport de nombre de spires n avec celui de l'inductance 105 ; 105' et une résistance dissipative 132 ayant une valeur R (courbe 152) présente une valeur égale à :-U/(R/n$^2$) qui, avec des choix convenables des valeurs R et n peut être très significativement inférieure à l'intensité du courant sans le dispositif de protection 131 à 133, dès lors qu'il existe des contraintes dans le choix des valeurs L et C du filtre d'entrée, qui sont liées au fonctionnement des convertisseurs 120, 120' des modules de puissance 160, 160', ce qui n'est pas le cas du circuit auxiliaire de protection 131 à 133.

Sur la figure 1, on a représenté deux modules de puissance 160, 160', mais naturellement l'invention s'applique à un plus grand nombre de modules de puissance alimentés à partir d'alimentations en parallèle à partir d'une source de tension continue commune.

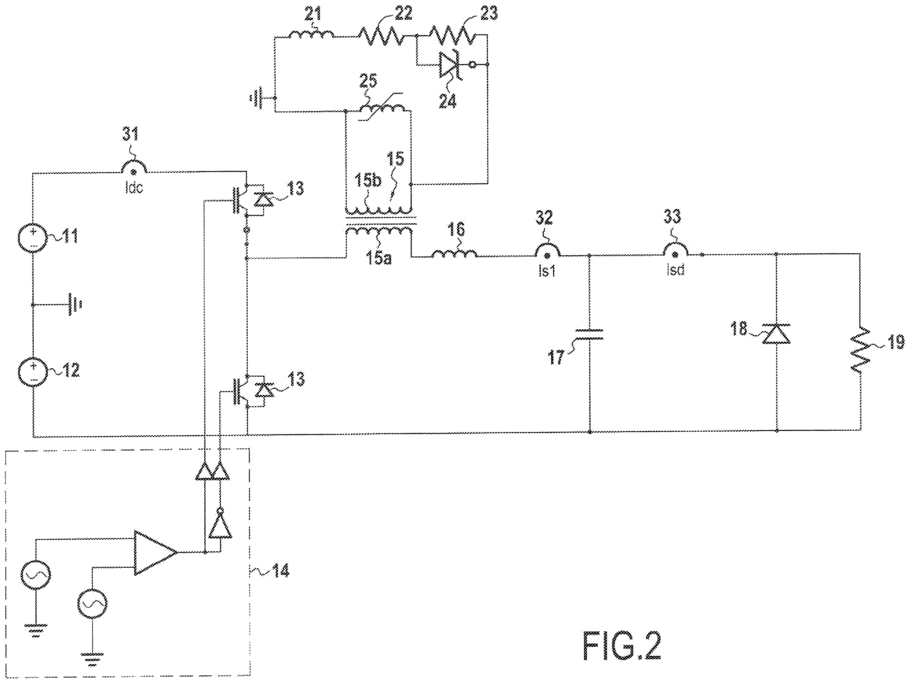

La figure 2 montre un exemple particulier de mise en oeuvre d'un dispositif de protection selon l'invention avec des moyens de mesure destinés à caractériser l'effet du dispositif de protection selon l'invention.

Sur la figure 2, le primaire 15a d'un transformateur 15 est alimenté à l'aide de commutateurs 13 commandés par un circuit de commande 14, permettant alternativement la connexion à l'alimentation 11, 12, et l'exécution d'un court-circuit amont; l'alimentation est constituée de sources de tension continue 11, 12 (de par exemple chacune 300V).

Le secondaire 15b du transformateur 15 est relié à une série d'éléments contribuant à servir de limiteur de courant, tels que des inductances 21, 25, des résistances 22, 23 et une diode Zener 24.

Conformément à l'invention, un enroulement secondaire constituant une bobine auxiliaire 15b est associé au primaire 15a du transformateur 15. Un module de puissance avec son filtre d'entrée et son convertisseur sont symbolisés par un condensateur 17, une diode 18 et une résistance de charge 19 qui sont montés en parallèle et sont connectés par l'une de leurs extrémités à la borne d'une bobine 16 non reliée au primaire 15a du transformateur 15 et par l'autre de leurs extrémités aux commutateurs 13,

Afin de réaliser des mesures, une sonde de courant 31 est connectée en série avec les sources de tension continue 11, 12 pour mesurer un courant d'intensité Idc, une sonde de courant 32 est connectée entre la bobine auxiliaire 16 et le condensateur 17 pour mesurer un courant d'intensité Is1 et une sonde de courant 33 est connectée entre le condensateur 17 et la résistance 19 pour mesurer un courant d'intensité Isd.

Le secondaire 15b du transformateur 15 dont le rapport de transformation primaire 15a - secondaire 15b est 1:n, la résistance 22 de valeur R et la diode 24 jouent le même rôle que les éléments 131 à 133 respectivement de la figure 1.

La diode 18 représente les diodes de roue libre 118, 118' incluses dans les convertisseurs 120 et 120' de la figure 1.

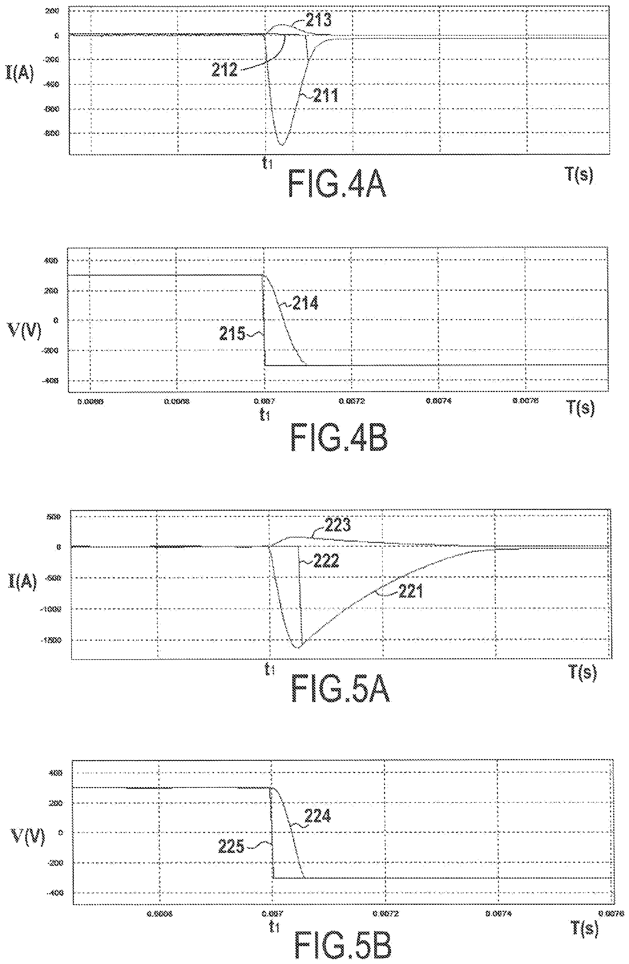

Les figures 4A et 4B montrent des courbes représentant l'évolution dans le temps de l'intensité et de la tension mesurées en divers points du circuit de la figure 2, avec une simulation de court-circuit à un instant t1, pour une résistance 22 valant 40 ohm et correspondant à une valeur de Isd crête de 200A.

Les figures 5A et 5B montrent des courbes représentant l'évolution dans le temps de l'intensité et de la tension mesurées en divers points du circuit de la figure 2 avec une simulation de court-circuit à un instant t1, pour une résistance 22 valant 4 ohm et correspondant à une valeur de Isd crête de 1600A.

Les courbes 211 et 221 des figures 4A et 5A représentent l'intensité du courant Is1 mesurée à l'aide de la sonde 32.

Les courbes 212 et 222 des figures 4A et 5A représentent l'intensité du courant Isd mesuré à l'aide de la sonde 33.

Les courbes 213 et 223 des figures 4A et 5A représentent l'intensité du courant Isecondaire mesurée au secondaire du transformateur 15.

Les courbes 214 et 224 des figures 4B et 5B représentent la valeur de la tension Vcapa aux bornes du condensateur 17.

Les courbes 215 et 225 des figures 4B et 5B représentent la valeur de la tension Vcrowbar appliquée à l'entrée du module de puissance.

On constate que grâce aux mesures préconisées selon la présente invention, à savoir l'adjonction d'une simple bobine auxiliaire 15b et d'une résistance dissipative 22, associée à une diode 24, au primaire 15a du transformateur 15, en cas de court-circuit au niveau du filtre d'entrée formé par le primaire 15a de transformateur et le condensateur 17, la répercussion sur le courant Isd traversant la diode 18 est très atténuée.

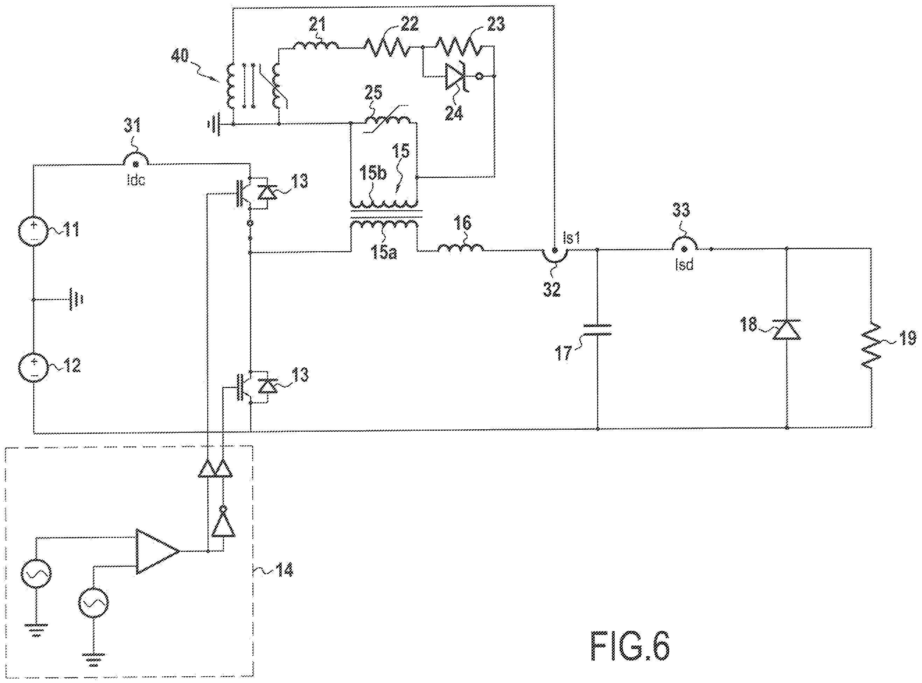

La figure 6 montre un exemple de dispositif de protection selon l'invention, tel que celui décrit plus haut en référence à la figure 2, avec une détection de surintensité du courant Is1 mesuré par la sonde 32 et une commutation des éléments 15b et 21 à 25 qui sont réalisées par un amplificateur magnétique 40. Les éléments communs aux circuits des figures 2 et 6 portent les mêmes numéros de référence.

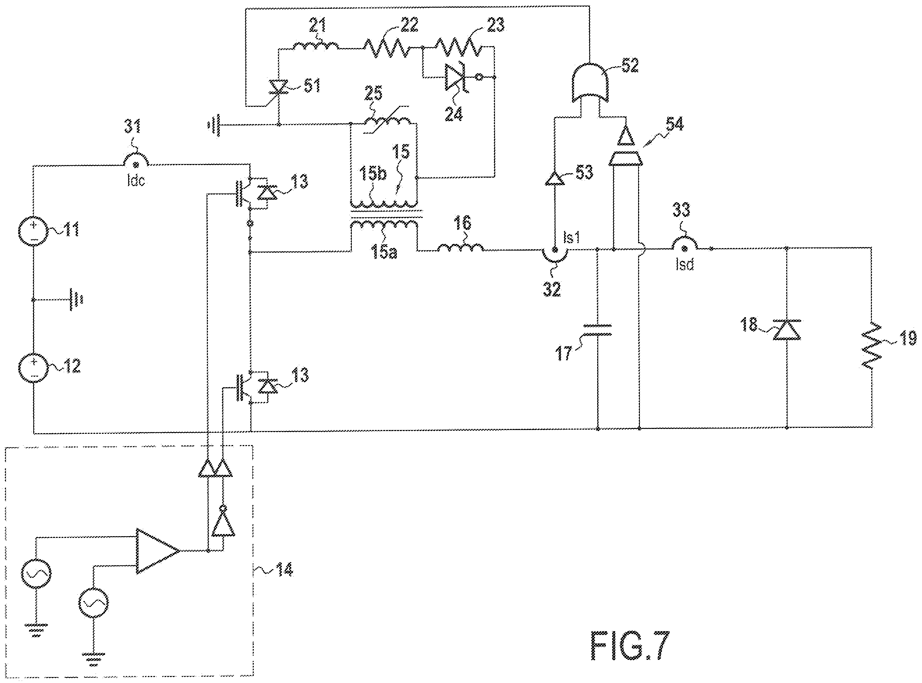

La figure 7 montre un autre exemple de dispositif de protection selon l'invention, tel que celui décrit plus haut en référence à la figure 2, avec une détection de surintensité du courant Is1 mesuré par la sonde 32 ou de sous-tension aux bornes du condensateur 17, par des composants logiques 52 à 54 comprenant une porte OU 52. Une commutation des éléments 15b et 21 à 25 est effectuée par un composant actif 51, qui peut être par exemple un thyristor dont la gâchette est reliée à la sortie de la porte OU 52. Là encore, les éléments communs aux circuits des figures 2 et 7 portent les mêmes numéros de référence.

L'invention n'est pas limitée aux modes de réalisation décrits, mais s'étend à toutes les variantes entrant dans le cadre des revendications.

En particulier si l'élément dissipatif est avantageusement constitué par une résistance de freinage, d'autres dispositifs dissipatifs sont possibles.

## Revendications

**1.** Dispositif de protection contre des courts-circuits amont d'un module d'alimentation électrique de puissance (160, 160') comprenant un filtre d'entrée avec au moins un condensateur (106 à 108, 106' à 108' ; 17) et une inductance (104, 105, 104', 105' ; 16) et un convertisseur (120, 120' ; 19) avec des composants associés à une pluralité de diodes de roue libre (118, 118' ; 18), **caractérisé en ce que** le dispositif de protection comprend au moins un bobinage auxiliaire (131 ; 15b) couplé à ladite au moins une inductance (105') du filtre d'entrée et un élément dissipatif (132 ; 22) connecté audit au moins un bobinage auxiliaire (131 ; 15b), ledit élément dissipatif (132 ; 22) étant adapté pour dissiper l'énergie emmagasinée dans ledit au moins un condensateur (106 à 108, 106' à 108' ; 17) du filtre d'entrée, lorsqu'un court-circuit (103) est réalisé à l'entrée dudit filtre d'entrée.

**2.** Dispositif de protection selon la revendication 1, **caractérisé en ce que** l'élément dissipatif (132 ; 22) est constitué par une résistance de freinage.

**3.** Dispositif de protection selon la revendication 1 ou la revendication 2, **caractérisé en ce qu'**un organe de commutation (40 ; 51) est configuré de manière à n'autoriser le courant à circuler dans ledit bobinage auxiliaire (131 ; 15b) que lorsque cet organe de commutation (40 ; 51) a détecté un dysfonctionnement dû au court-circuit.

**4.** Dispositif de protection selon la revendication 3, **caractérisé en ce que** l'organe de commutation (51) est un composant actif.

**5.** Dispositif de protection selon la revendication 3, **caractérisé en ce que** l'organe de commutation (40) est un amplificateur magnétique.

**6.** Dispositif de protection selon l'une quelconque des revendications 3 à 5, **caractérisé en ce que** le dysfonctionnement à détecter par l'organe de commutation (51) est une chute brutale de tension aux bornes du condensateur du filtre d'entrée (17).

**7.** Dispositif de protection selon l'une quelconque des revendications 3 à 5, **caractérisé en ce que** le dysfonctionnement à détecter par l'organe de commutation (40 ; 51) est une surintensité au sein du convertisseur.

**8.** Dispositif de protection selon l'une quelconque des revendications 1 à 7, **caractérisé en ce qu'**il est appliqué à un module de puissance (160, 160') destiné à l'alimentation électrique d'un aéronef.

## Patentansprüche

**1.** Vorrichtung zum Schutz vor stromaufwärtigen Kurzschlüssen eines Stromversorgungs-Leistungsmoduls (160, 160'), mit einem Eingangsfilter mit wenigstens einem Kondensator (106 bis 108, 106' bis 108'; 17) und einer Induktivität (104, 105, 104', 105'; 16) und einem Wandler (120, 120'; 19) mit Bauteilen, die einer Vielzahl von Freilaufdioden (118, 118'; 18) zugeordnet sind, **dadurch gekennzeichnet, dass** die Schutzvorrichtung wenigstens eine mit der wenigstens einen Induktivität (105') des Eingangsfilters gekoppelte Hilfswicklung (131; 15b) und ein mit der wenigstens einen Hilfswicklung (131; 15b) verbundenes ableitendes Element (132; 22) umfasst, wobei das ableitende Element (132; 22) dazu ausgelegt ist, die in dem wenigstens einen Kondensator (106 bis 108, 106' bis 108'; 17) des Eingangsfilters gespeicherte Energie abzuleiten, wenn ein Kurzschluss (103) am Eingang des Eingangsfilters entsteht.

**2.** Schutzvorrichtung nach Anspruch 1, **dadurch gekennzeichnet, dass** das ableitende Element (132; 22) durch einen Bremswiderstand gebildet ist.

**3.** Schutzvorrichtung nach Anspruch 1 oder Anspruch 2, **dadurch gekennzeichnet, dass** ein Schaltorgan (40; 51) derart ausgebildet ist, dass es dem Strom gestattet, in der Hilfswicklung (131; 15b) nur dann zu fließen, wenn dieses Schaltorgan (40; 51) eine durch den Kurzschluss bedingte Fehlfunktion erfasst hat.

**4.** Schutzvorrichtung nach Anspruch 3, **dadurch gekennzeichnet, dass** das Schaltorgan (51) ein aktives Bauteil ist.

**5.** Schutzvorrichtung nach Anspruch 3, **dadurch gekennzeichnet, dass** das Schaltorgan (40) ein Magnetverstärker ist.

**6.** Schutzvorrichtung nach einem der Ansprüche 3 bis 5, **dadurch gekennzeichnet, dass** die durch das Schaltorgan (51) zu erfassende Fehlfunktion ein plötzlicher Spannungsabfall an den Anschlüssen des Kondensators des Eingangsfilters (17) ist.

**7.** Schutzvorrichtung nach einem der Ansprüche 3 bis 5, **dadurch gekennzeichnet, dass** die durch das Schaltorgan (40; 51) zu erfassende Fehlfunktion ein Überstrom innerhalb des Wandlers ist.

**8.** Schutzvorrichtung nach einem der Ansprüche 1 bis 7, **dadurch gekennzeichnet, dass** sie an einem Leistungsmodul (160, 160') zur Stromversorgung eines Flugzeugs angebracht ist.

**Claims**

**1.** A protection device for providing protection against short-circuits upstream from an electrical power supply module (160, 160') having an inlet filter with at least one capacitor (106 to 108, 106' to 108'; 17) and an inductor (104, 105, 104', 105'; 16), and having a converter (120, 120'; 19) with components associated with a plurality of freewheel diodes (118, 180'; 18), the protection device being **characterized in that** it comprises at least one auxiliary winding (131; 15b) coupled to said at least one inductor (105') of the inlet filter and a dissipator element (132; 22) connected to said at least one auxiliary winding (131; 15b), said dissipator element (132; 22) being adapted to dissipate the energy stored in said at least one capacitor (106 to 108, 106' to 108'; 17) of the inlet filter in the event of a short-circuit (13) occurring at the inlet of said inlet filter.

**2.** A protection device according to claim 1, **characterized in that** the dissipator element (132; 22) is constituted by a braking resistance.

**3.** A protection device according to claim 1 or claim 2, **characterized in that** a switch member (40; 51) is configured so as to allow the current to flow in said auxiliary winding (131; 50 B) only when the switch member (40; 51) has detected a malfunction due to the short-circuit.

**4.** A protection device according to claim 3, **characterized in that** the switch member (51) is an active component.

**5.** A protection device according to claim 3, **characterized in that** the switch member (40) is a magnetic amplifier.

**6.** A protection device according to any one of claims 3 to 5, **characterized in that** the malfunction to be detected by the switch member (51) is a sudden drop in the voltage across the terminals of the capacitor of the inlet filter (17).

**7.** A protection device according to any one of claims 3 to 5, **characterized in that** the malfunction to be detected by the switch member (40; 51) is an overcurrent within the converter.

**8.** A protection device according to any one of claims 1 to 7, **characterized in that** it is applied to a power module (160, 160') for providing an electrical power supply in an aircraft.

FIG.1

FIG.3A

FIG.3B

FIG.2

FIG.4A

FIG.4B

FIG.5A

FIG.5B

FIG.6

FIG.7

EP 3 057 870 B1